# EUROPEAN PATENT APPLICATION

(11) **EP 2 679 618 A1**
(43) Date of publication of application: **01.01.2014**
(21) Application number: 11859557.8
(22) Date of filing: 11.08.2011
(51) Int. Cl.: C08J 5/04, B29C 70/06, C08L 61/28, C08K 7/04

(54) **METHOD FOR MANUFACTURING PLASTIC REINFORCED BY FLAME RETARDANT FIBERS, AND FLAME RETARDANT FIBER REINFORCED PLASTIC FORM MANUFACTURED THEREBY**

(30) Priority: 22.02.2011 KR 20110015340
(71) Applicant: TFT Co., Ltd., Gyeonggi-do 420-031 (KR)
(72) Inventor: JANG, Dong Gi, Pyeongtaek-si, Gyeonggi-do 451-852 (KR)
(74) Representative: Keilitz, Wolfgang
(86) International application number: PCT/KR2011/005883
(87) International publication number: WO 2012/115315

(57) **Abstract**

The present invention relates to a method of manufacturing plastic reinforced by flame retardant fibers. The method of manufacturing plastic reinforced by flame retardant fibers includes: a) mixing a thermosetting resin containing a methylol group and an inorganic flame retardant material, and introducing a solvent to disperse the mixture and then diluting the mixture with water, thereby manufacturing an aqueous resin solution; b) immersing flame retardant fibers in the aqueous resin solution; c) drying the immersed flame retardant fibers; d) forming the dried flame retardant fibers; and e) cooling the formed plastic. The method of manufacturing the plastic reinforced by flame retardant fibers may be a method of manufacturing plastic reinforced by flame retardant fibers which is suitable for a flame retardant material on the basis of a "flame retardant performance reference for an interior finishing material for a house". The plastic reinforced by flame retardant fibers manufactured by the method according to the present invention may be a first-grade flame retardant material (nonflammable material) or a second-grade flame retardant material (quasi-flame-retardant material) and has the superior physical proprieties required for the interior finishing material for a house, such as specific gravity, Barcol hardness, absorption rate, tensile strength, bending rigidity, bending modulus, wear resistance, and flame resistance.

## Description

### [Technical Field]

The present invention relates to a method of manufacturing a flame retardant fiber reinforced plastic and a molded article manufactured by the same, and more particularly, to a method of manufacturing a flame retardant fiber reinforced plastic including: a) preparing an aqueous resin solution by mixing a thermosetting resin containing a methylol group with an inorganic flame retarding material, introducing a solvent to disperse the mixture, and then diluting the mixture with purified water; b) impregnating flame retardant fibers with the aqueous resin solution; c) drying the impregnated flame retardant fibers; d) molding the dried flame retardant fibers; and e) cooling the molded plastic, and a flame retardant fiber reinforced plastic molded article manufactured by the same.

### [Background Art]

In general, resins used in a method of manufacturing flame retardant fiber reinforced plastics are commercially available in the form of thermosetting resin containing a methylol group, wherein the thermosetting resin containing a methylol group is prepared by reacting phenol resin or melamine resin with formaldehyde at a ratio from about 1:2 to about 1:6.

The commercially available thermosetting resin containing a methylol group can be molded by being pressurized to a pressure of 15 kgf/cm² or more at a temperature of 120 to 180 °C. Current principal uses of the thermosetting resin include molding of containers, decoration panels, printed circuit boards, and others using glass fiber, pulp, cellulose and others as fillers.

Flame retarding materials generally used for flame retarding such resin are generally divided into organic flame retarding materials containing halogen, phosphorous or amines and inorganic flame retarding materials containing inorganic minerals as a principal component.

Existing methods include an example using silica or alumina as a flame retarding material (Korean Patent No. 10-0756646), an example using guanidine as a flame retarding material (Korean Patent Laid-open Publication No. 10-2004-0083206), an example using sodium hydrogen carbonate (Korean Utility Model Publication No. 20-2009-0005309), an example using gypsum (Korean Patent Laid-open Publication No. 10-2001-0020511), an example using aluminum oxide (Korean Patent Laid-open Publication No. 10-2001-0058789), and an example using calcium carbonate, silicon oxide, magnesium oxide, magnesium chloride and others (Korean Patent Laid-open Publication No. 10-2005-0117711) in addition to an example of using an inorganic ammonium phosphate as a flame retarding material in thermosetting resin to manufacture a decoration panel (Korean Utility Model registration No. 20-0183182). However, none of the examples has recognized the determination of flame retardancy in a flame resistance test (KS M 3015: 2003 (A method)), the V-0 level in a 20 mm vertical burning test (UL 94: 1996), or the suitability as a flame retarding material in "flame retardant performance standard of a building interior finishing material" used for buildings (Notification No. 2009-866 of Ministry of Land, Transport and Maritime Affairs).

### [Disclosure]

### [Technical Problem]

An object of the present invention is to provide a method of manufacturing flame retardant fiber reinforced plastics of which the suitability is recognized as a flame retarding material in accordance with the "flame retardant performance standard of a building interior finishing material" as described above, wherein the flame retardant fiber reinforced plastics manufactured by the method according to the present invention are suitably utilized as the building interior finishing material since the flame retardant fiber reinforced plastics are materials that are thin and light while satisfying the above-mentioned standard.

### [Technical Solution]

According to an aspect of the present invention for achieving the object, the present invention provides a method of manufacturing a flame retardant fiber reinforced plastic including: a) preparing an aqueous resin solution by mixing a thermosetting resin containing a methylol group with an inorganic flame retarding material, introducing a solvent to disperse the mixture, and then diluting the mixture with water; b) impregnating flame retardant fibers with the aqueous resin solution; c) drying the impregnated flame retardant fibers; d) molding the dried flame retardant fibers; and e) cooling the molded plastic.

According to another aspect of the present invention, the present invention provides a flame retardant fiber reinforced plastic molded article manufactured according to the above-mentioned method. The flame retardant fiber reinforced plastic molded article may include 20 to 40% by weight of thermosetting resin containing a methylol group with respect to the total weight of the molded article, 10 to 30% by weight of inorganic flame retarding material with respect to the total weight of the molded article, and 30 to 60% by weight of flame retardant fibers with respect to the total weight of the molded article. The retardant fiber reinforced plastic molded article according to the present invention may be utilized such building materials as materials for interiors, exteriors and fire doors.

### [Advantageous Effects]

A method of manufacturing a flame retardant fiber reinforced plastic according to the present invention is a method of manufacturing a flame retardant fiber reinforced plastic which recognized to be suitable for a flame retarding material on the basis of a "flame retardant performance standard of a building interior finishing material." The flame retardant fiber reinforced plastic manufactured by the method according to the present invention is a first-grade flame retarding material (nonflammable material) or a second-grade flame retarding material (quasi-nonflammable material) and also has excellent physical properties required for the building interior finishing material such as specific gravity, Barcol hardness, absorption rate, tensile strength, flexural rigidity, bending modulus, wear resistance, and flame resistance.

### [Description of Drawings]

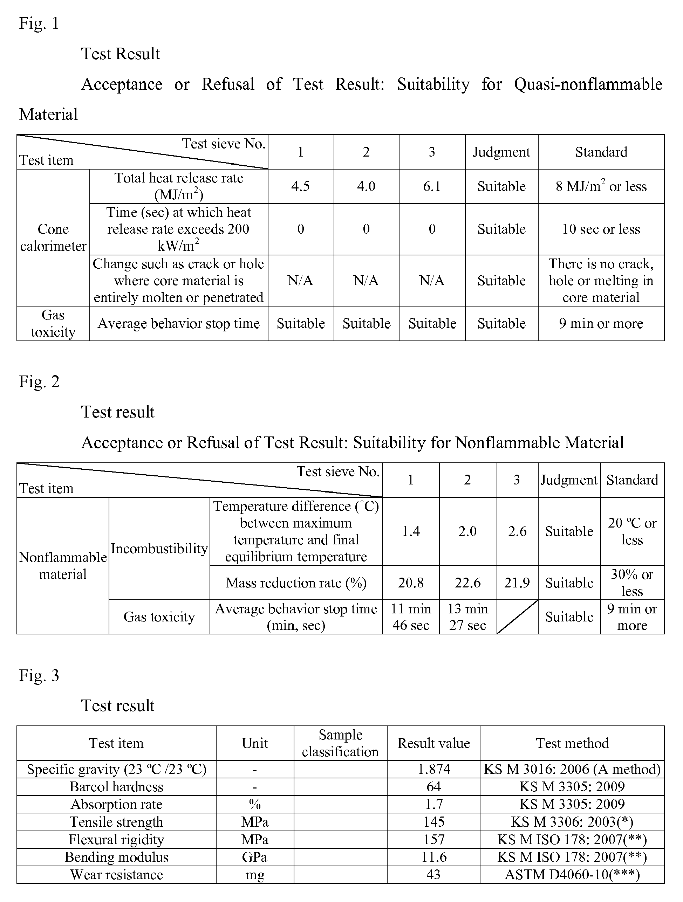

Fig. 1 is a second-grade flame retardancy test result of a flame retardant fiber reinforced plastic manufactured according to a method of the present invention, which is tested according to a "flame retardant performance standard of a building interior finishing material" (Notification No. 2009-866 of Ministry of Land, Transport and Maritime Affairs) at Korea Institute of Construction Technology.
Fig. 2 is a first-grade flame retardancy test result of a flame retardant fiber reinforced plastic manufactured according to the method of the present invention tested according to the "flame retardant performance standard of a building interior finishing material" (Notification No. 2009-866 of Ministry of Land, Transport and Maritime Affairs) at Korea Institute of Construction Technology.
Fig. 3 is test results obtained according to test methods performed at Korea Testing and Research Institute based on respective physical properties such as specific gravity, Barcol hardness, absorption rate, tensile strength, flexural rigidity, bending modulus and wear resistance of a flame retardant fiber reinforced plastic manufactured according to the method of the present invention.

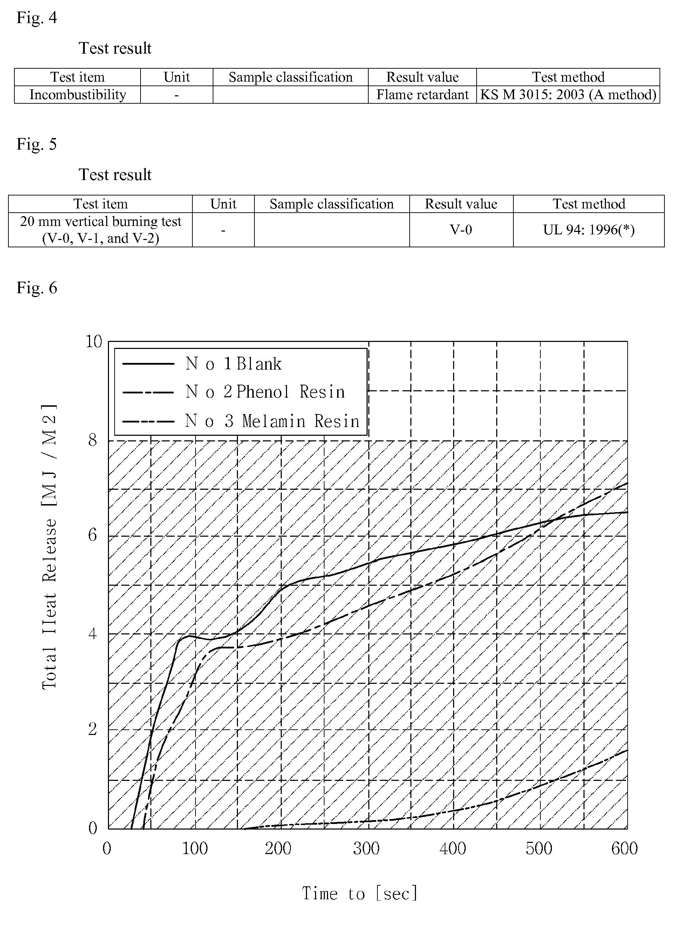

Fig. 4 is test results of flame resistance of a flame retardant fiber reinforced plastic manufactured according to the method of the present invention performed at Korea Testing and Research Institute according to KS M 3015: 2003 (A method).
Fig. 5 is results of a 20 mm vertical burning test of a flame retardant fiber reinforced plastic manufactured according to the method of the present invention performed at Korea Testing and Research Institute according to UL 94: 1996.
Fig. 6 is results of a second-grade flame retardancy test performed for comparing combustion characteristics of methylol melamine resin and methylol phenol resin to conform a performance difference between thermosetting resins.

### [Best Mode]

Hereinafter, a method according to the present invention is specifically described step by step as follows.

The step a) of the present invention is a step of mixing 20 to 30% by weight of a thermosetting resin containing a methylol group with respect to the total weight of an aqueous resin solution with 10 to 25% by weight of an inorganic flame retarding material with respect to the total weight of the aqueous resin solution, introducing 1 to 10% by weight of a solvent with respect to the total weight of the aqueous resin solution to disperse the mixture, and then diluting the mixture with 50 to 60% by weight of water with respect to the total weight of the aqueous resin solution.

If contents of the thermosetting resin containing a methylol group, the inorganic flame retarding material, the solvent, and water are deviated from the above-mentioned ranges in the aqueous resin solution, physical properties of a flame retardant fiber reinforced plastic that is a final product, e.g., specific gravity, Barcol hardness, absorption rate, tensile strength, flexural rigidity, bending modulus, wear resistance, and others are substantially dropped.

The step b) of the present invention is characterized in that the flame retardant fibers are glass fibers or carbon fibers, wherein both of the glass fibers and carbon fibers have a merit of high strength, and the glass fibers particularly have merits that material cost is low and color of a final molded article is white such that the final molded article is advantageous in variously being colored.

The step c) of the present invention is a step of drying the impregnated flame retardant fibers at a temperature of 100 °C or less, the step d) is a step of molding the dried flame retardant fibers at a pressure of 15 to 200 kgf/cm² at a temperature of 120 to 200 °C, and the step e) is a step of cooling the molded plastic at a temperature of 40 °C or less with a pressure of 20 kgf/cm² or less applied thereto.

Specific temperature and pressure ranges in the steps c) to e) are conditions that the flame retardant fiber reinforced plastic sufficiently contains carbon fibers or glass fibers as the flame retardant fibers and the flame retardant fiber reinforced plastic maintains shear strength and flatness.

A thermosetting resin containing a methylol group according to the present invention is characterized in that the thermosetting resin is methylol melamine resin or methylol phenol resin, the inorganic flame retarding material includes two or more selected from the group consisting of aluminum hydroxide, magnesium hydroxide, zinc borate, triammonium phosphate, and antimony trioxide, and the inorganic flame retarding material is contained in the amount of 30 to 50% by weight with respect to weight of the thermosetting resin containing a methylol group.

The above-mentioned methylol melamine or methylol phenol resin has a merit of improving binding power with the flame retardant fibers. Further, there are merits in that when the two or more flame retarding materials are used within the above range of % by weight, the flame retarding materials are easily dissolved into water, mixing or dilution of the flame retarding materials with the resin is facilitated in state of an aqueous solution, the flame retarding materials can be dispersed without using a volatile solvent, and volatile organic compounds (VOCs) are not emitted after molding the resin.

A flame retardant fiber reinforced plastic manufactured according to a method of the present invention is manufactured for a purpose of use in an interior material for buildings, and satisfies a second-grade or higher flame retardancy when performing a performance test in accordance with the "flame retardant performance standard of a building interior finishing material" (Notification No. 2009-866 of Ministry of Land, Transport and Maritime Affairs) that is a flame retardancy performance evaluating standard of such an interior material for buildings.

The "flame retardant performance standard of a building interior finishing material" (Notification No. 2009-866 of Ministry of Land, Transport and Maritime Affairs) classifies its flame retardancy grade into a third-grade flame retardancy (flame retarding material), a second-grade flame retardancy (quasi-nonflammable material), and a first-grade flame retardancy (nonflammable material), and the most important issues in such a flame retardant performance standard are summarized as follows.

First, combustion gas should be less generated during the combustion. This is because gases generated during the combustion are ignited to perform an action of increasing the total heat release rate or temperature inside the furnace and further to have a bad influence of reducing the behavior stop time of a mouse in a gas toxicity test.

Second, toxicity should be less contained in the generated gases. This is because toxic gas generated during the combustion is the most important factor of reducing the behavior stop time of a mouse.

Finally, the amount of evaporation should be less during the combustion. This is because a mass reduction rate can be increased when performing the flame retarding material performance test.

Test and suitability standards according to flame retardancy grades which reflect such three important issues are summarized as in the following Table 1.

**[Table 1]**

| Rating | Test item | | Test condition | Standard of suitability |
|---|---|---|---|---|
| 1st-grade flame retardancy (nonflammable material) | Incombustibility (combustion by electricity) | Temperature difference (°C) between maximum temperature and final equilibrium temperature | Combustion at 750 °C for 20 min | 20 °C or less |
| | | Mass reduction rate | | 30% or less |
| | Gas toxicity | Average behavior stop time | mouse | 9 min or more |
| 2nd-grade flame retardancy (quasi-nonflammable material) | Cone calorimeter | Total heat release rate (MJ/m²) | Combustion at about 800 °C for 10 min | 8 MJ/m² or less |
| | | Time (sec) at which the heat release rate exceeds 200 kW/m² | | 10 sec or less |
| | | Change such as crack or hole in which core material is entirely molten or penetrated | Naked eye | There should be no crack, hole or melting in core material |
| | Gas toxicity | Average behavior stop time | Mouse | 9 min or more |
| 3rd-grade flame retardancy (flame retarding material) | Cone calorimeter | Total heat release rate (MJ/m²) | Combustion at about 800 °C for 10 min | 8 MJ/m² or less |
| | | Time (sec) at which heat release rate exceeds 200 kW/m² | | 10 seconds or less |
| | | Change such as crack or hole in which core material is entirely molten or penetrated | Naked eye | There should be no crack, hole or melting in the core material |
| | Gas toxicity | Average behavior stop time | Mouse | 9 min or more |

Hereinafter, the present invention will be described in more detail through examples. However, the present invention is not limited to the examples.

### Examples

### <Manufacturing Process>

A flame retardant plastic molded article is manufactured through the following five steps:

### First Step:

Preparing an aqueous resin solution by mixing 20 to 30% by weight of a thermosetting resin containing a methylol group (a methylol melamine resin or a methylol phenol resin) with respect to the total weight of the aqueous resin solution, 10 to 25% by weight of an inorganic flame retarding material (which includes a mixture of two or more of aluminum hydroxide, magnesium hydroxide, zinc borate and ammonium phosphate and is used in the amount of 30 to 50% by weight with respect to the weight of the thermosetting resin containing a methylol group), 1 to 10% by weight of methanol or formaldehyde as a solvent with respect to the total weight of the aqueous resin solution, and 50 to 60% by weight of purified water with respect to the total weight of the aqueous resin solution, and then warming and dissolving the mixture.

### Second Step:

Impregnating and coating glass fibers with the aqueous resin solution.

### Third Step:

Drying the impregnated glass fibers at a temperature of 100 °C or less.

### Fourth Step:

Molding the dried glass fibers at a pressure of 15 to 200 kgf/cm² at a temperature of 120 to 200 °C.

### Fifth Step:

Cooling the molded article at a temperature of 40 °C or less with a pressure of 4 to 20 kgf/cm² applied thereto.

### <Contents for components of the manufactured molded article>

20 to 40% by weight of a thermosetting resin containing a methylol group
10 to 30% by weight of an inorganic flame retarding material
30 to 60% by weight of glass fibers

Second-grade and first-grade flame retardancy tests were performed on a flame retardant fiber reinforced plastic molded article manufactured through the above-mentioned manufacturing process in accordance with a flame retardant performance standard of a building interior finishing material (Notification No. 2009-866 of Ministry of Land, Transport and Maritime Affairs) at Korea Institute of Construction Technology. The second-grade flame retardancy test was performed by measuring time (sec) at which a total heat release rate and a heat release rate exceed 200 kW/m² and changes in cracks or holes in which a core material is entirely molten or penetrated in the cone calorimeter laboratory under the environment including a temperature of 23±2 °C and a relative humidity of 50±5%, and by measuring gas toxicity through the average behavior stop time of a mouse in the gas toxicity laboratory under the environment including a temperature of 21±1 °C and a relative humidity of 26±1%. The first-grade flame retardancy test was performed by measuring incombustibility through a temperature difference (°C) between the maximum temperature and the final equilibrium temperature and the mass reduction rate (%) and by measuring the gas toxicity through the average behavior stop time of a mouse under the environment including a temperature of 25±1 °C and a relative humidity of 17±1%.

As results of such tests, judgments for second-grade flame retardancy (quasi-nonflammable materials) and first-grade flame retardancy (nonflammable materials) were received on January 5 and 14, 2011, respectively, and test reports designating the test results are represented in Figs. 1 and 2, respectively.

Further, specific gravity (test method - KS M 3016: 2006 (A method)), Barcol hardness (test method - KS M 3305: 2009), absorption rate (test method - KS M 3305: 2009), tensile strength (test method - KS M 3006: 2003), flexural rigidity (test method - KS M ISO 178: 2007), bending modulus (test method - KS M ISO 178: 2007), and wear resistance (test method - ASTM D4060-10) of a flame retardant fiber reinforced plastic molded article manufactured through the above-mentioned manufacturing process were measured in accordance with respective standard test methods per respective physical properties at Korea Testing and Research Institute, and the measurement results are represented in Fig. 3.

Additionally, a flame resistance test and a 20 mm vertical burning test were performed according to standard test methods KS M 3015: 2003(A method) and UL 94: 1996, respectively, and test results are represented in Fig. 4 and 5, respectively.

As illustrated in the test results of Figs. 1 to 5, it can be confirmed that a flame retardant fiber reinforced plastic molded article manufactured according to the present invention has a second-grade or first grade flame retardancy as a flame redundancy grade and is suitable for the "flame retardant performance standard of a building interior finishing material" (Notification No. 2009-866 of Ministry of Land, Transport and Maritime Affairs), and required physical properties, flame resistance, and 20 mm vertical burning test results are also excellent.

In addition to the above-mentioned tests, combustion characteristics of a methylol melamine resin and a methylol phenol resin were compared to confirm a performance difference between thermosetting resins.

Molded articles were manufactured by mixing respective resins with inorganic flame retarding materials in the same amount as the resins, dissolving the mixture into water to prepare aqueous resin solutions, impregnating glass fiber cross-mats with the aqueous resin solutions, and drying, warming and pressing it. Total heat release rates of the molded articles were measured by burning the molded articles for 10 minutes using a cone calorimeter.

The results represent 6.5 and 7.1 MJ/m² as shown in the following Table 2 and Fig. 6, which indicates that a difference in flame retardancy between the methylol melamine resin and the methylol phenol resin is insignificant if the same flame retarding fibers or the same flame retarding materials are used.

**[Table 2]**

| Test item | | Methylol melamine resin | Methylol phenol resin (Resol) | Standard |
|---|---|---|---|---|
| Cone calorimeter | Total heat release rate (MJ/m²) | 6.5 | 7.1 | 8 MJ/m² or less |
| | Time (sec) at which heat release rate exceeds 200 kW/m² | 0 | 0 | 10 sec or less |
| | Change such as crack or hole where a core material is entirely molten or penetrated | None | None | Confirm by naked eye that there is no crack, hole or melting in core material |
| Smoke generation | | None | None | - |
| Judgment | | Equivalent to second-grade flame retardancy | Equivalent to second-grade flame retardancy | |

## Claims

1. A method of manufacturing a flame retardant fiber reinforced plastic, comprising:
a) preparing an aqueous resin solution by mixing a thermosetting resin containing a methylol group with an inorganic flame retarding material, introducing a solvent to disperse the mixture, and then diluting the mixture with water;
b) impregnating flame retardant fibers with the aqueous resin solution;
c) drying the impregnated flame retardant fibers;
d) molding the dried flame retardant fibers; and
e) cooling the molded plastic.

2. The method according to Claim 1, wherein the step a) comprises mixing 20 to 30% by weight of the thermosetting resin containing a methylol group with respect to the total weight of the aqueous resin solution with 10 to 25% by weight of the inorganic flame retarding material with respect to the total weight of the aqueous resin solution, introducing 1 to 10% by weight of the solvent with respect to the total weight of the aqueous resin solution to disperse the mixture, and then diluting the mixture with 50 to 60% by weight of water with respect to the total weight of the aqueous resin solution.

3. The method according to Claim 1, wherein in the step b), the flame retardant fibers are glass fibers or carbon fibers.

4. The method according to Claim 1, wherein the step c) comprises drying the impregnated flame retardant fibers at a temperature of 100 °C or less.

5. The method according to Claim 1, wherein the step d) comprises molding the dried flame retardant fibers at a pressure of 15 to 200 kgf/cm² at a temperature of 120 to 200 °C.

6. The method according to Claim 1, wherein the step e) comprises cooling the molded plastic at a temperature of 40 °C or less with a pressure of 20 kgf/cm² or less applied thereto.

7. The method according to any one of Claims 1 to 6, wherein the thermosetting resin containing a methylol group is methylol melamine resin or methylol phenol resin.

8. The method according to any one of Claims 1 to 6, wherein the inorganic flame retarding material includes two or more selected from the group consisting of aluminum hydroxide, magnesium hydroxide, zinc borate, triammonium phosphate, and antimony trioxide, and the inorganic flame retarding material is contained in the amount of 30 to 50% by weight with respect to weight of the thermosetting resin containing a methylol group.

9. A flame retardant fiber reinforced plastic molded article manufactured according to the method according to any one of Claims 1 to 6, the flame retardant fiber reinforced plastic molded article comprising 20 to 40% by weight of the thermosetting resin containing a methylol group with respect to the total weight of the molded article, 10 to 30% by weight of the inorganic flame retarding material with respect to the total weight of the molded article, and 30 to 60% by weight of flame retarding fibers with respect to the total weight of the molded article.
